# EUROPEAN PATENT APPLICATION

(11) **EP 0 814 015 A2**
(43) Date of publication of application: **29.12.1997**
(21) Application number: 97303740.1
(22) Date of filing: 03.06.1997
(51) Int. Cl.: B62K 25/04, B62K 23/00

(54) **Suspension element adjusting device for a bicycle**

(30) Priority: 18.06.1996 US 665419
(71) Applicant: Shimano Inc., Osaka 590-77 (JP)
(72) Inventor: Hara, Nobukatsu, Sakai-shi, Osaka (JP)
(74) Representative: Pacitti, Pierpaolo A.M.E.

(57) **Abstract**

A bicycle suspension element adjusting device control unit (14) includes a base member (100), first operating member (104) coupled to the base member (100), and a second operating member (108) coupled to the base member (100). The first operating member (104) is adapted to couple to a transmission control element (60,61) or brake control element (66,68), and the second operating member (108) is adapted to couple to a suspension element adjusting device (35,83). The base member (100) may be mounted to a structural element of the bicycle such as the handlebars (102) so that the suspension element adjusting device (35,83) may be operated with the same convenience as the brake control device (62,64) or transmission control device (54,59) without stopping the bicycle.

## Description

### BACKGROUND OF THE INVENTION

The present invention is directed to bicycles equipped with suspension elements and, more particularly, to a device for remotely adjusting the suspension elements.

Bicycles used for riding over rough terrain are often equipped with various suspension elements to absorb and damp the shocks which occur when the wheels strike rocks and other hazards on uneven terrain. One type of suspension element is the suspension fork which mounts the front wheel. Both legs of the fork are provided with shock absorbing cylinders filled with an elastomeric material, air, oil, or a combination of these elements. Another type of suspension element is the rear shock absorber which mounts to a pivoting portion of the rear frame. This type of suspension element also may be filled with an elastomeric material, air, oil, or a combination of these elements.

Basic shock absorbers are often constructed with a preset amount of shock damping which does not change. The shock absorber may be set for rough or smooth riding, or at some intermediate setting. Unfortunately, most bicycles are not ridden over a single type of terrain. Thus, a suspension element that is set for riding over rough terrain will provide a harsh ride when riding over smooth terrain. On the other hand, a suspension element set for riding over smooth terrain will "bottom out" and provide jarring shocks when the bicycle is ridden over rough terrain. Changing the suspension element for different riding conditions is possible but very inconvenient. Thus, such shock absorbers are usually mounted on bicycles used for a specific purpose.

More advanced suspension elements are provided with an adjustment mechanism which allows the amount of damping to be changed depending upon the riding conditions. Such mechanisms are usually an integral part of the fork legs or rear shock absorber. While such adjustment devices overcome the problems inherent with preset damping, they are somewhat inconvenient to use because the rider must stop and dismount the bicycle to adjust the suspension element. If the terrain changes often, then constant dismounting of the bicycle becomes annoying and impracticable. Consequently, cyclists often initially adjust the amount of damping based on the overall amount of terrain roughness and then leave the suspension element at the initial setting. Of course, the suspension element then effectively operates just like the non-adjustable type of shock absorber and provides an unacceptable level of damping for terrain which does not match the setting.

### SUMMARY OF THE INVENTION

The present invention is directed to an adjustable suspension element for a bicycle wherein the amount of damping may be adjusted as the cyclist is riding the bicycle. In other words, the amount of damping may be set without requiring the cyclist to dismount or even stop the bicycle.

In one embodiment of the present invention, a bicycle suspension element adjusting device control unit includes a base member, a first operating member coupled to the base member, and a second operating member coupled to the base member. The first operating member is adapted to couple to a transmission control element or brake control element, and the second operating member is adapted to couple to a suspension element adjusting device. The base member may be mounted to a structural element of the bicycle such as the handlebars so that the suspension element adjusting device control unit may be operated with the same convenience as the brake or transmission control devices without stopping the bicycle. By locating the second operating member in close proximity to the first operating member, the suspension element adjusting device control unit may be operated immediately before or after the brake or transmission control device so that the rider may change the amount of damping immediately upon the change of terrain which necessitates the operation of the brake or transmission control device.

The second operating member may take many different forms and may mimic the structure of the first operating member. Thus, the second operating member may be in the form of a lever, a knob, a twistable grip, or some other structure.

### BRIEF DESCRIPTION OF THE DRAWINGS

Figure 1 is a view of a particular embodiment of a bicycle employing a suspension element adjusting device control unit according to the present invention;
Figure 2 is a top view of a particular embodiment of a suspension element adjusting device control unit according to the present invention; and
Figures 3-6 are top views of alternative embodiments of a suspension element adjusting device control unit according to the present invention.

### DETAILED DESCRIPTION OF THE EMBODIMENTS

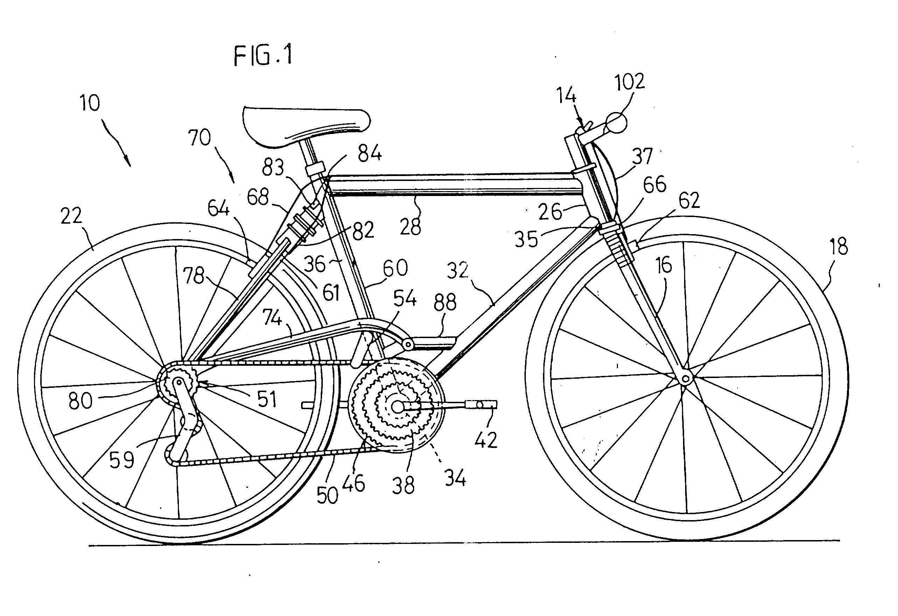

Figure 1 is a view of a particular embodiment of a bicycle 10 employing a suspension element adjusting device control unit 14 according to the present invention. Bicycle 10 includes front and rear wheels 18 and 22, a front suspension fork assembly 16 that carries the front wheel 18 and pivots in a head tube 26 to steer the bicycle, a top tube 28 and down tube 32 connected to the head tube, a bottom bracket 34 connected to down tube 32, and a seat tube 36 connected between top tube 28 and bottom bracket 34. Both legs of suspension fork assembly 16 are provided with shock absorbing cylinders filled with an elastomeric material, air, oil, or a combination of these elements. Front suspension fork assembly 16 includes a suspension element adjusting device 35 disposed on the upper portion of at least one of the shock absorbing cylinders for adjusting the damping of one or both of the shock absorbing cylinders. Suspension element adjusting device 35 may be a conventional dial or hydraulic adjusting device which may be operated by a control cable 37.

A crank assembly 38 is mounted through bottom bracket 34. Crank assembly 38 has pedals 42 and a number of concentric spaced sprockets 46 of varying diameters. In this bicycle there are three sprockets, and a chain 50 shifts between each of them by means of a front derailleur 54 attached to the seat tube 36. The rear wheel 22 includes a plurality of sprockets 51 (e.g., eight), and chain 50 shifts between each of these sprockets 51 by means of a rear derailleur 59. Front derailleur 54 and rear derailleur 59 are operated by conventional control cables 60 and 61, respectively. Brakes 62 and 64 are mounted in close proximity to the front and rear wheels 18,22, respectively, and they are operated by conventional control cables 66 and 68.

The rear wheel 22 is supported dynamically relative to the rest of the frame by a rear suspension system 70. Suspension system 70 comprises a pair of chain stays 74 disposed on both sides of rear wheel 22, a pair of seat stays 78 disposed on both sides of rear wheel 22, a pair of axle brackets 80 connecting each chain stay 74 to a corresponding seat stay 78, and a shock absorber 82. Shock absorber 82 may be a typical shock absorbing cylinder filled with an elastomeric material, air, oil, or a combination of these elements. Shock absorber 82 includes a suspension element adjusting device 83 disposed on an upper portion thereof for adjusting the damping of the shock absorbing cylinder. Suspension element adjusting device 83 may be a conventional dial or hydraulic adjusting device which may be operated by a control cable 84.

Chain stays 74 are pivotably coupled to a bridge tube 88 which is coupled between the seat tube 36 and down tube 32. Thus, when rear wheel 22 rides over an obstacle, chains stays 74 pivot clockwise relative to bridge tube 88, but shock absorber 82 dampens the shock.

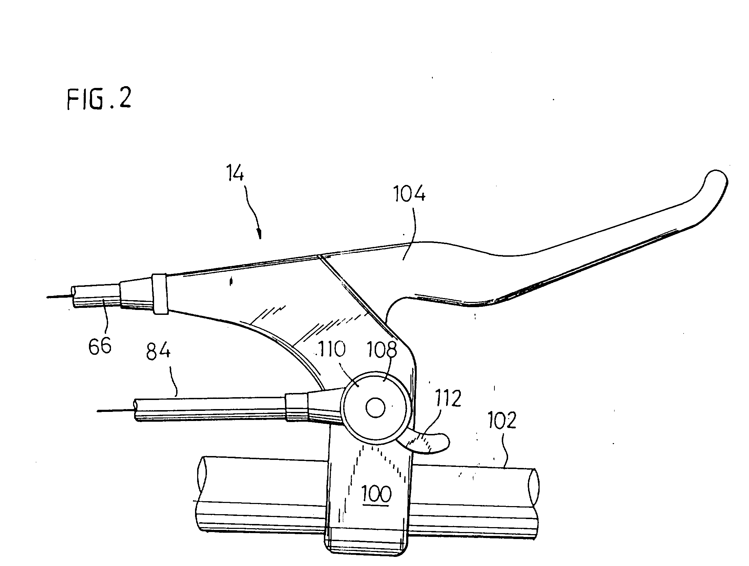

Figure 2 is a top view of a particular embodiment of suspension element adjusting device control unit 14 according to the present invention. Suspension element adjusting device control unit 14 includes a base member 100 adapted to be fixed to a structural member of the bicycle, a first operating member 104 pivotably coupled to the base member 100, and a second operating member 108 coupled to the base member 100. In this embodiment, base member 100 is adapted to couple to a handlebar 102 of the bicycle, first operating member 104 is a brake lever coupled to brake control cable 66, and second operating member 108 is coupled to control cable 84 for suspension element adjusting device 83. Of course, brake lever 104 may be coupled to either brake control cable 66 or 68, and second operating member 108 may be coupled to either control cable 37 or 84 as desired. Element 110 may be a rotating knob with or without a finger extension 112, or it may be a casing for a spool in which case element 112 would be an operating lever. This embodiment allows the cyclist to easily adjust the damping of the suspension device when the cyclists hands are disposed near the brake lever 104.

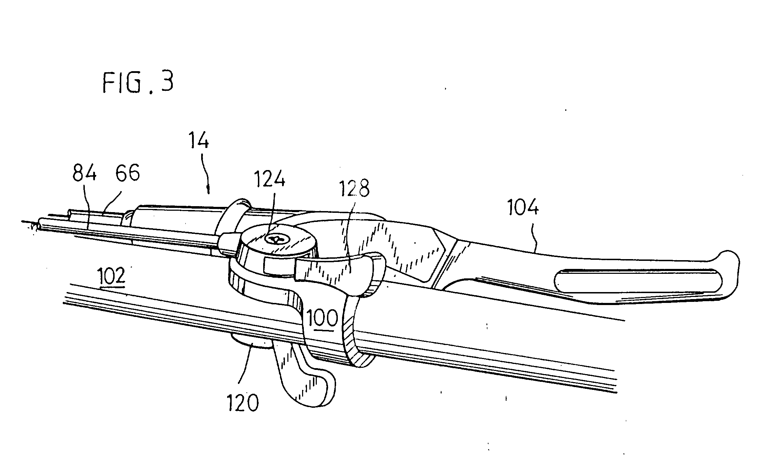

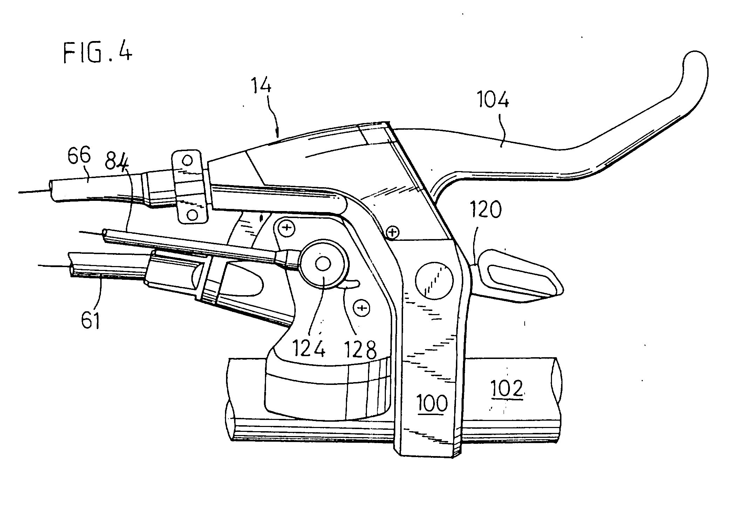

Figure 3 is a top view of an alternative embodiment of suspension element adjusting device control unit 14. In this embodiment, a brake lever 104 is pivotably coupled to base member 100, a first operating member in the form of a conventional derailleur shift control device 120 coupled to either control cable 60 or 61 is mounted to base member 100, and a second operating member 124 in the form of a spool (not shown) coupled to a lever 128 is coupled to control cable 37 or 84. This embodiment allows the cyclist to easily shift, brake, or adjust the damping of the suspension device without stopping the bicycle. As with the first embodiment, second operating member 124 may also take the form of a knob with or without a finger extension as shown in Figure 4.

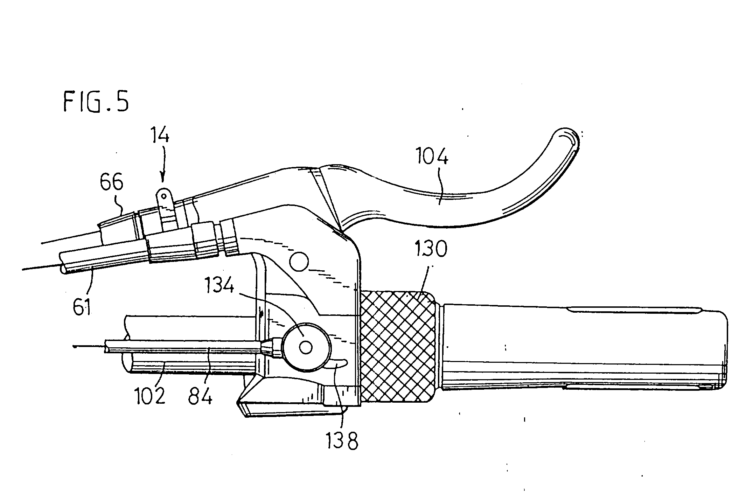

Figure 5 is a top view of an alternative embodiment of suspension element adjusting device control unit 14. In this embodiment, a first operating member in the form of a twist-grip derailleur shift control device 130 coupled to either control cable 60 or 61 is mounted to base member 100, and a second operating member 134 in the form of a spool or knob couplcd to a lever or finger extension is 138 is coupled to control cable 37 or 84. This embodiment also allows the cyclist to easily shift, brake, or adjust the damping of the suspension device without stopping the bicycle.

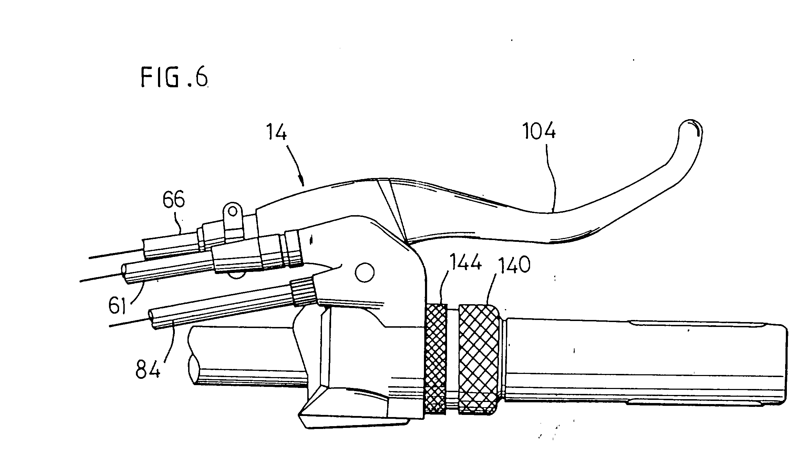

Figure 6 is a top view of an alternative embodiment of suspension element adjusting device control unit 14. In this embodiment, a first operating member in the form of a rotatable twist-grip derailleur shift control device 140 coupled to either control cable 60 or 61 is mounted to base member 100, and a second operating member 144 in the form of another rotatable twist-grip device is coupled to control cable 37 or 84. This embodiment also allows the cyclist to easily shift, brake, or adjust the damping of the suspension device without stopping the bicycle.

While the above is a description of various embodiments of the present invention, further modifications may be employed without departing from the spirit and scope of the present invention. Thus, the scope of the invention should not be limited by the specific structures disclosed. Instead, the true scope of the invention should be determined by the following claims.

## Claims

1. A control device for a bicycle comprising:
a base member;
a first operating member coupled to the base member, the first operating member being adapted to couple to a transmission control element or a brake control element; and
a second operating member coupled to the base member, the second operating member being adapted to couple to a suspension element adjusting device.

2. The device according to Claim 1 wherein the first operating member is adapted to couple to a transmission control element.

3. The device according to Claim 1 wherein the first operating member is adapted to couple to a brake control element.

4. The device according to any preceding claim wherein the base member is adapted to be fixed to a handlebar of the bicycle.

5. The device according to any preceding claim further comprising an elongated cable fixed to the second operating member for coupling the second operating member to the suspension element adjusting device.

6. The device according to any preceding claim wherein the first operating member comprises a rotatable member for mounting coaxially to a structural member of the bicycle.

7. The device according to any preceding claim wherein the second operating member comprises a rotatable member adapted to mount coaxially to a structural member of the bicycle.

8. The device according to any preceding claim wherein the second operating member is mounted coaxially with the first operating member.

9. The device according to any preceding claim wherein the second operating member comprises a lever.

10. The device according to any preceding claim wherein the second operating member comprises a knob.

11. The device according to any preceding claim wherein the first operating member comprises at least a lever.

12. The device according to any preceding claim wherein the first operating member is adapted to couple to one of a brake or transmission control element and further comprising a third operating member adapted to couple to the other of a brake or transmission control element.
